Europäisches Patentamt

European Patent Office

Office européen des brevets

(19)

(11) Veröffentlichungsnummer: **0 021 306**
**B1**

(12) **EUROPÄISCHE PATENTSCHRIFT**

(45) Veröffentlichungstag der Patentschrift: 01.06.83

(21) Anmeldenummer: **80103349.9**

(22) Anmeldetag: **16.06.80**

(51) Int. Cl.³: **H 01 H 33/32, H 01 H 1/14, H 01 R 13/22, B 23 K 11/24**

(54) Kontakteinrichtung für einen Hochstromkreis einer Widerstandsschweisseinrichtung.

(30) Priorität: **28.06.79 SE 7905678**

(43) Veröffentlichungstag der Anmeldung:
**07.01.81 Patentblatt 81/1**

(45) Bekanntmachung des Hinweises auf die Patenterteilung:
**01.06.83 Patentblatt 83/22**

(84) Benannte Vertragsstaaten:
**BE CH DE FR GB IT LI NL SE**

(56) Entgegenhaltungen:
**DE - A - 1 765 415**
**US - A - 1 849 930**
**US - A - 3 649 789**
**US - A - 3 763 344**

(73) Patentinhaber: **ESAB Aktiebolag**
**Box 8004 Herkulesgatan 72**
**S-402 77 Göteborg (SE)**

(72) Erfinder: **Hedrén, Axel Thomas**
**Skyttegatan 5**
**S-696 00 Askersund (SE)**
Erfinder: **Larsson, Rolf Gösta**
**Bäverstigen 14**
**S-69500 LAXAA (SE)**

(74) Vertreter: **Frisch, Kurt**
**c/o ESAB AB Box 8004**
**S-402 77 Göteborg (SE)**

Kontakteinrichtung für einen Hochstromkreis einer Widerstandsschweisseinrichtung

Die Erfindung bezieht sich auf eine Kontakteinrichtung mit mindestens einem Paar paralleler Kontaktplatten zur Einschaltung in einen Hochstromkreis zwischen einem Schweisstransformator und einer Widerstandsschweisseinrichtung, die längs einer senkrecht zur Plattenebene stehenden Achse zwischen einer Kontaktstellung, in der die Kontaktplatten durch eine Druckeinrichtung an ihren zueinander gewandten Kontaktflächen fest aneinander gepresst sind, und einer Unterbrechungsstellung, in der die Kontaktplatten an ihren Kontaktflächen durch eine Spalt getrennt und relativ zueinander um die Achse drehbar und relativ zu- und voneinander verschiebbar sind (z.B. GB—A—1378196) Unter Hochstromkreisen werden hier solche Stromkreise verstanden, die für Ströme von mindestens 1 kA, vorzugsweise für Ströme in der Grössenordnung von 10 kA und mehr, ausgelegt sind. Stromstärken dieser Grössenordnung sind beim Wiederstandsschweissen üblich.

Kontakteinrichtungen der gennanten Gattung werden insbesondere bei Robotern verwendet. Diese Roboter sind mit einem Gelenkarm versehen, an dessen freiem Ende ein Werkzeughalter befestigt ist. Wird an diesem beispielsweise eine Punktschweisszange befestigt, wäre es auch wünschenswert, den zugehörigen Schweisstransformator fest an der Schweisszange anzubringen, so dass eine Relativbewegung zwischen Werkzeug und Transformator bei Umstellung des Roboters vermieden wird. Die Hochstromleitung zwischen Werkzeug und Transformator könnte in diesem Fall eine feste verbindung sein. In den meisten Fällen ist jedoch eine derartige Befestigung des Schweisstransformators in unmittelbarer Nähe des Schweisswerkzeuges aus Platzmangel nicht möglich. Der Schweisstransformator wird daher meistens auf einem anderen Teil des Gelenkarmes angebracht und das Werkzeug vollführt bei der Umstellung zwischen den Schweissstellen gegenüber dem Schweisstransformator eine Relativbewegung. Der Stromleiter, der den Transformator mit dem Werkzeug verbindet, muss diesen Bewegungen folgen können. Es scheint am einfachsten biegbare Leiter, beispielsweise geflochtene Kabel, zu verwenden. Diese Kabel werden aber teils durch die sich stets ändernden Biegebeanspruchungen und teils durch die wegen der vorkommenden hohen Stromstärken bedeutenden, stossartigen Beanspruchungen, sehr rasch abgenützt.

Es ist daher vorgeschlagen werden, im wesentlichen steife Leiter zu verwenden. Die erforderliche gegenseitige Beweglichkeit wird durch Kontaktvorrichtungen der eingangs erwähnten Gattung erreicht, die mit den ensprechenden Gelenken des Armes zusammengebaut sind. Vor der Umstellung des Gelenkarmes mit dem Werkzeug wird der Kontakt zwischen den Kontaktplatten unterbrochen, so dass die Kontaktplatten der Drehbewegung der Gelenke folgen können. In der neuen Arbeitsstellung werden die Platten wieder Kontaktgebend zusammengedrückt um die Ueberführung des Schweissstromes vom Transformator zum Werkzeug zu ermöglichen.

Die Umstellungsbewegung der Kontaktplatten ist bisher mit Hilfe von Druckluftzylindern ausgeführt worden, die jedoch sehr viel Platz beanspruchen. Dies wirkt sich besonders nachteilig aus, wenn die Kontaktvorrichtungen mit den Gelenken des Roboterarmes auf möglichst beschränktem Raum zusammengebaut werden sollen.

Der vorliergenden Erfindung liegt die Aufgabe zugrunnde, eine einfache und platzsparende Kontaktvorrichtung zu schaffen.

Dies wird gemäss der Erfindung dadurch erreicht, dass zumindest eine Kontaktplatte des Kontaktplattenpaares mit einem Druckgaskanal versehen ist, der einen Teil einer Druckgasleitung bildet, die sich von einer Druckgasquelle bis zu einer Öffnung des Druckgaskanals in der Kontaktfläche erstreckt.

Wenn der Druckgaskanal mit Druckgas gefüllt ist, werden die Kontaktplatten durch den Gasdruck auseinander geschoben und in die Unterbrechungslage gebracht. Besondere Druckgaszylinder sind nicht mehr erforderlich. Mit dieser erfindungsgemässen Kontakteinrichtung wird zusätzlich der Vorteil gewonnen, dass das aus dem Gaskanal in den Spalt zwischen den beiden Platten austretende Druckgas die Kontaktflächen rein bläst und ein Festsetzen von Schmutzpartikeln auf den Kontaktflächen wirksam verhindert.

Gemäss einer vorteilhaften Ausführung der Erfindung ist die Kontaktplatte mit mindestens drei Druckgaskanälen versehen, deren Öffnungen in der Kontaktfläche bezüglich der Achse vorzugsweise summetrisch verteilt sind. Damit wird zwischen den Platten ein gleichförmiges Druckgefälle des ausströmenden Gases erreicht. Man muss jedoch noch mit einer geringen Schrägstellung der Kontaktplatten rechnen, da der dynamische Gasdruck in den Öffnungen verschieden sein wird. Die Spaltbreite muss daher genügend gross gewählt werden, damit die Kontaktplatten auch bei Schrägstellung nicht aneinander anliegen, was zu einem raschen Verschleiss und einer gleichzeitigen Verringerung der wirksamen Kontaktflächen führen würde.

Gemäss einer weiteren vorteilhaften Ausführungsform der Erfindung ist daher in jeder der mit den Druckgaskanälen verbundenen Druckgasleitungen eine Drosselvorrichtung vorgesehen, die die durch den Druckgaskanal strömende Gasmenge pro Zeiteinheit begrenzt. Damit lässt sich die von jeder Kanalöffnung austretende Gasmenge so einstellen, dass die Kontaktplatten längs der Achse einwandfrei parallel verschoben werden und eine Schrägstellung vermieden wird. Die Drosselvorrichtungen bewirken, dass bereits bei einer Spaltbreite von nur einigen Zehnteln Millimeter eine Vollkommene Trennung der Kontaktplatten gewährleistet werden kann. Diese Spaltbreite muss dabei um Vergleich zur Kontaktplattengrösse betrachtet werden, die durch die zulässige Strombelastung pro Flächeneinheit bestimmt wird. Diese bewegt sich im Grössenbereich von etwa 2—6 A/mm².

Die Kontakteinrichtung ist meistens mit zwei Paaren von parallelen Kontaktplatten versehen, da zwackmässigerweise sowohl Hin- als auch Rückleiter des Hochstromkreises über solche Kontaktplatten geführt werden. Eine solche Kontakteinrichtung ist mit zwei Paaren auf der Achse in Reihe angebrachten Kontaktplatten versehen, von denen die beiden äusseren Kontaktplatten fest miteinander isoliert verbunden sind und die beiden inneren Kontaktplatten zu ihren entsprechenden äusseren Kontaktplatten relativ verschiebbar sind.

Gemäss einer vorteilhaften Ausführungsform der vorliegenden Erfindung werden die inneren Kontaktplatten in der Kontaktstellung von einem zwischen diesen angebrachten, druckgasbetätigten, elastischen Mittel gegen ihre äusseren Kontaktplatten gepresst. Da dieses Mittel für die beiden inneren Kontaktplatten gemeinsam ist, ergibt sich eine kurze, raumsparende Baulänge für die vier in Reihe angebrachten Kontaktplatten.

Weitere vorteilhafte Merkmale ergeben sich aus der nachfolgenden Beschreibung eines Ausführungsbeispiels sowie aus den übrigen abhangigen Ansprüchen.

In den Zeichnungen veranschaulicht

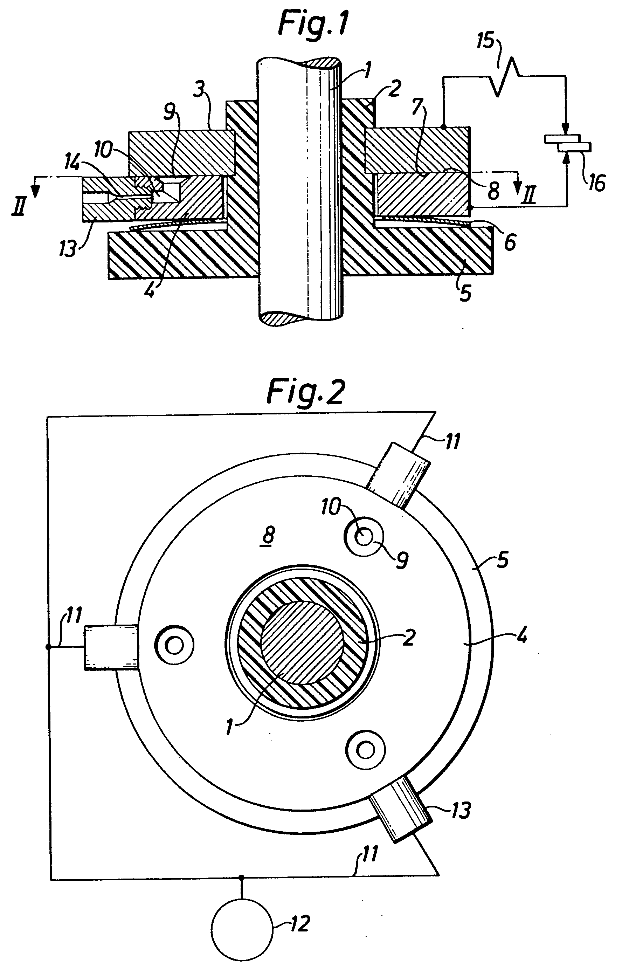

Fig. 1 einen Schnitt durch eine Kontakteinrichtung mit einem Kontaktplattenpaar,

Fig. 2 einen Schnitt längs der Linie II—II in Fig. 1,

Fig. 3 eine Draufsicht und Fig. 4 eine Seitenansicht einer Kontakteinrichtung mit zwei Kontaktplattenpaaren,

Fig. 5 einen Schnitt längs der Linie V—V in Fig. 3,

Fig. 6 teilweise schematisch einen Roboter mit einer Punktschweisszange und

Fig. 7 eine Draufsicht des Roboters.

Auf einer Achse 1 ist eine Isolierhühlse 2 drehbar angebracht. Von einem zylindrischen Kontaktplattenpaar 3, 4 ist die eine Kontaktplatte 3 mit der Isilierhülse 2 fest verbunden. Die andere Kontaktplatte 4 ist auf der Isilierhülse 2 drehbar und achsial verschiebbar angebracht. Zwischen der Kontaktplatte 4 und einem Flansch 5 der Isolierhülse 2 ist eine Tellerfeder 6 eingesetzt, die die Kontaktplatte 4 gegen die Kontaktplatte 3 presst, um den erforderlichen Kontaktdruck im Bereich der entsprechenden Kontaktflächen 7, 8 zu erzeugen.

Die Kontaktplatte 4 ist mit drei symmetrisch angebrachten Austrittsöffnungen 9 von Druckgaskanälen 10 versehen, die über Druckgasleitungen 11 an eine gemeinsame Druckgasquelle 12 angeschlossen sind. Der Anschluss der Druckgasleitungen an die Kontaktplatte 4 geschieht mit Nippeln 13, die je eine Druckgaskanalverengung 14 besitzen.

Die Kontaktplatten 3, 4 sind in einen Hochstromkreis einer Widerstandseinrichtung eingeschaltet, was hier nur schematisch durch eine Sekundärwicklung 15 eines Schweisstransformators und eine Punktschweissstelle 16 angedeutet ist.

Wenn die Druckgaskanäle 10 unter Druck gesetzt werden, wird die Kontaktplatte 4 gegen die Federkraft der Tellerfeder 6 zum Flansch 5 hin verschoben und der Kontakt zwischen der Kontaktplatten 3, 4 wird unterbrochen. Die beiden Kontaktplatten können nun relativ zueinander auf der Achse 1 verdreht werden. Die auftretenden Reibungskräfte zwischen der Tellerfeder 6 einerseits und dem Flansch 5 bzw. Kontaktplatte 4 andererseits bei Drehung der Kontaktplatten können durch bekannte konstruktive Massnahmen, die hier nicht näher angegeben sind, klein gehalten werden. Anstelle der Tellerfeder können auch andere gleichhartig wirkende Druckeinrichtungen verwendet werden.

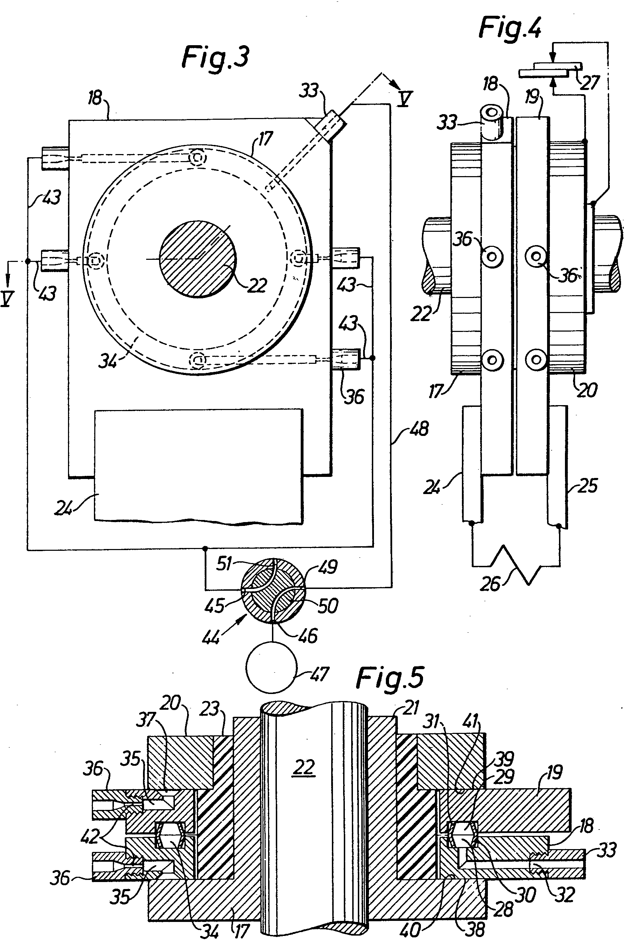

Die Kontaktvorrichtung in Fig. 3 bis 5 ist mit zwei Kontaktplattenpaaren 17, 18 und 19, 20 ausgerüstet. Die Kontaktplatte 17 ist mit einem Rohrstutzen 21 versehen, der auf eine Achse 22 aufgeschoben ist. Auf dem Rohrstutzen 21 sitzt eine Isolierhülse 23, die die Kontaktplatte 17 mit der Kontaktplatte 20 kraftschlüssig verbindet. Die beiden inneren Kontaktplatten 18, 19 sind auf die Isolierhülse 23 lose aufgeschoben und um diese drehbar. Je eine Stromschiene 24, 25 ist an die Kontaktplatten 18, 19 angeschlossen. In Fig. 4 ist ein Schweissstromkreis schematisch angedeutet, der aus Schweisstransformator 26, Stromschiene 24, Kontaktplatten 18, 17 einer Schweissstelle 27, Kontaktplatten 20, 19 und Stromschiene 25 gebildet wird.

Die inneren Kontaktplatten 18, 19 besitzen Ringnuten 28, 29, in die Dichtungsringe 30, 31 mit V-förmigem Querschnitt aus elastischem und isolierendem Material eingelegt sind. Die elastischen Dichtungsringe 30, 31 drücken sich mit ihren Kanten an den Nutengrund der Ringnuten 28, 29 an.

Die Kontaktplatte 18 besitzt einen Druckgaskanal 32, der sich von einem Anschlussnippel 33 bis zu einer von den Ringnuten 28, 29 und Dichtungsringen 30, 31 gebildeten Ringkammer 34 erstreckt. Die Kontaktplatten 18, 19 sind ausserdem mit je vier Druckgaskanälen 35 versehen, die sich von Anschlussnippeln 36 bis zu Öffnungen 37 in den Kontaktflächen 38, 39 der Kontaktplatten 18, 19 erstrecken. Den Kontaktflächen 38, 39 entsprechen die Kontaktflächen 40, 41 der Kontaktplatten 17, 20. Jeder Anschlussnippel ist mit einer Druckgaskalanverengung 42 versehen, die, wie bereits oben beschrieben, eine Drossel für den Gasstrom darstellt, mit der die ausströmende Gasmenge per Zeiteinheit bei gegebenem Gasdruck auf einen bestimmten Wert begrenzt wird.

Eine Ringkammer der genannten Art kann auch durch einen in die Ringnuten eingelegten Schlauch gebildet werden, der an die Druckgasquelle angeschlossen ist.

In Fig. 3 werden schematisch vier Druckgasleitungen 43 der Kontaktplatte 18 gezeigt, die die Druckgaskanäle 35 mit einem für alle Druckgasleitungen 43 gemeinsamen Anschluss 45 eines Vierwegventils 44 verbinden, von dem ein Anschluss 46 mit einer Druckgasquelle 47 verbunden ist. In gleicher Weise sind auch die entsprechenden Druckgaskanäle 35 der Kontaktplatte 19 mit dem Anschluss 45 verbunden. Die Ringkammer 34 ist durch eine Druckgasleitung 48 mit einem Anschluss 49 des Vierwegventils 44 verbunden.

Je nach Stellung eines Schiebers 50 des Vierwegventils strömt das Druckgas entweder in die Ringkammer 34 oder in die acht Druckgaskanäle 35. In Fig. 3 ist der Schieber 50 in der Stellung gezeigt, in der die Druckgasquelle 47 mit der Ringkammer 34 verbunden ist. Die druckgaserfüllte Kammer dehnt sich in axialer Richtung aus und die Kontaktplatten 18, 19 werden an die entsprechenden Kontaktplatten 17, 20 gepresst.

Nach einer Vierteldrehung des Schiebers 50 werden die Druckgaskanäle 35 mit der Druckgasquelle 47 verbunden und der Gasdruck in der Ringkammer 34 wird durch einen freien Austritt 51 des Vierwegventils 44 entspannt. Durch den Gasdruck in den Druckgaskanälen 35 bildet sich zwischen den Kontaktflächen 38, 40 bzw. 39, 41 ein Druckluftpolster aus und die inneren Kontaktplatten 18, 19 werden von ihren entsprechenden Kontaktplatten 17, 20 entfernt und können in dieser Lage bezüglich der Kontaktplatten 17, 20 beliebig gedreht werden.

Wie oben beschrieben, wird die durch die Öffnungen 37 austretende Druckgasmenge pro Zeiteinheit in jeder Leitung durch die Druckgas Kanalverengungen 42 in den Anschlussnippeln 36 begrenzt. Da die Drosselwirkung durch Wahl der Verengung entsprechend angepasst werden kann, lassen sich die Kontaktplatten praktisch genau parallel verschieben und ein sehr kleiner Spalt genügt, um die Kontaktplatten praktisch ohne gegenseitige Reibung relativ zueinander drehen zu können. Für Kontaktplatten, die für Ströme von etwa 10 kA ausgelegt sind, genügt ein Spalt von etwa 0,2 mm, um eine vollkommene Trennung der Platten zu erreichen.

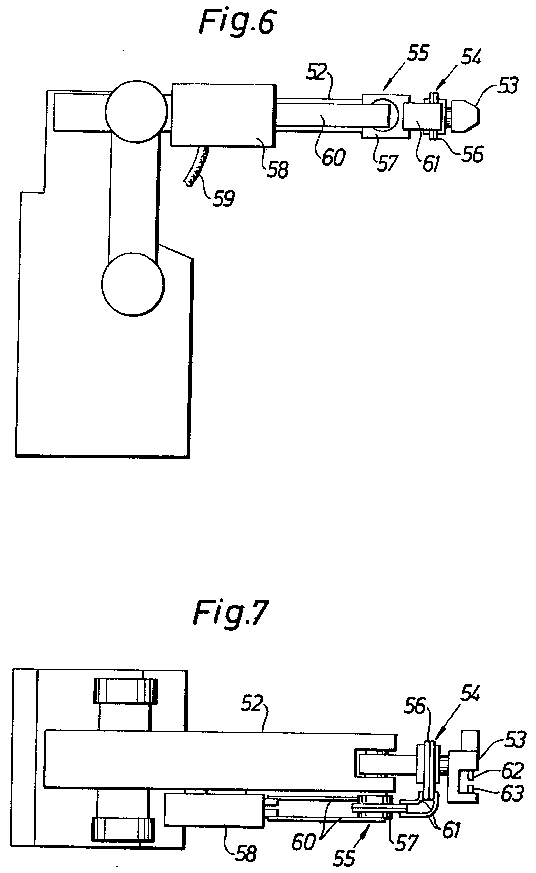

In Fig. 6 und 7 ist ein Roboter mit einem Gelenkarm 52 gezeigt. Eine am Armende befestigte Punktschweisszange 53 kann im Rahmen der Beweglichkeit der Armgelenke in einem gewissen Bereich frei bewegt werden. Ein dem Schweissapparat unmittelbar benachbartes Armgelenk 54 und ein anschliessendes Gelenk 55 sind mit je einer Kontaktvorrichtung 56, 57 versehen, wie sie oben beschrieben wurde. Der Arm trägt hinter dem Gelenk 55 einen Schweisstransformator 58, der mit einem Kabel 59 an ein hier nicht dargestelltes Versorgungsnetz angeschlossen ist. An die Sekundärklemmen des Schweisstransformators 58 sind Stromschienen 60 angeschlossen, die diesen mit der Kontaktvorrichtung 57 verbinden, die ihrerseits mit Stromschienen 61 mit der Kontaktvorrichtung 56 verbunden ist. Von dieser wird der Schweissstrom mittels hier nicht dargestellter Leitungen zu den beiden Elektroden 62, 63 der Punktschweisszange 53 geführt.

Die Stromschienen sind nich gänzlich unbeweglich und können den sehr kleinen Bewegungen der Kontaktplatten zwischen ihren beiden Stellungen folgen. Bevor der Gelenkarm 52 mit der Punktschweisszange 53 von einer Schweissstelle zur anderen geführt wird, werden die Kontaktplatten getrennt und das Armgelenk 54 und das Gelenk 55 können die erforderlichen Bewegungen unbehindert ausführen. Nach Erreichen der neuen Arbeitsstellung wird den Ringkammern der beiden Kontaktvorrichtungen das Druckgas zugeführt und die beiden inneren Kontaktplatten werden gegen die äusseren Kontaktplatten 17, 20 gepresst, wodurch auch die Gelenke in der eingestellten Lage fixiert werden.

Die Öffnungs- und Schliessbewegung der Kontaktplatten erfolgt zweckmässig in spannungslosen Zustand des Schweissstromkreises. Es ist jedoch auch möglich die Kontakteinrichtung als Schaltgerät zu verwenden, was allerdings entsprechend niedrige Spannungen und eine entsprechend angepasste Weite des Spaltes zwischen den Kontaktplatten voraussetzt um den Strom rasch und ohne merkbare Funkenbildung unterbrechen zu können.

**Patentansprüche**

1. Kontakteinrichtung mit mindestens einem Paar paralleler Kontaktplatten (3, 4; 17, 18; 19, 20) zur Einschaltung in einen Hochstromkreis zwischen einem Schweisstransformator (15; 26) und einer Widerstandsschweisseinrichtung (16; 27), die längs einer senkrecht zur Plattenebene stehenden Achse (1; 22) zwischen einer Kontaktstellung, in der die Kontaktplatten durch eine Druckeinrichtung (6; 34) an ihren zueinander gewandten Kontaktflächen (7, 8; 38, 40; 39, 41) fest aneinander gepresst sind, und einer Unterbrechungsstellung, in der die Kontaktplatten an ihren Kontaktflächen durch einen Spalt getrennt und relativ zueinander um die Achse (1; 22) drehbar und relativ zu- und voneinander verschiebbar sind, dadurch gekennzeichnet, dass zumindest eine Kontaktplatte (4; 18, 19) des Kontaktplattenpaares mit einem Druckgaskanal (10; 35) versehen ist, der einen Teil einer Druckgasleitung (11; 43) bildet, die sich von einer Druckgasquelle (12; 47) zu einer Öffnung (9; 37) des Druckgaskanals in der Kontaktfläche (8; 38, 39) erstreckt.

2. Kontakeinrichtung nach Patentanspruch 1, dadurch gekennzeichnet, dass die Kontaktplatte (4; 18, 19) mit mindestens drei Druckgaskanälen (10; 35) versehen ist, deren Öffnungen (9; 37) in der Kontaktfläche (8; 38, 39) bezüglich der Achse (1; 22) vorzugsweise symmetrisch verteilt sind.

3. Kontakteinrichtung nach Patentanspruch 1 oder 2, dadurch gekennzeichnet, dass in jeder der mit den Druckgaskanälen (10; 35) verbundenen Druckgasleitungen (11; 43) eine Drosselvorrichtung (14; 42) vorgesehen ist, die die durch den Druckgaskanal strömende Gasmenge pro Zeiteinheit begrenzt.

4. Kontakteinrichtung nach einem der Patentansprüche 1 bis 3 mit zwei Paaren auf der Achse (22) in Reihe angebrachten Kontaktplatten (17, 18, 19, 20), von denen die beiden äusseren Kontaktplatten (17, 20) fest miteinander isoliert verbunden sind und die beiden inneren Kontaktplatten (18, 19) zu ihren entsprechenden äusseren Kontaktplatten (17, 20) relativ verschiebbar sind, dadurch gekennzeichnet, dass die inneren Kontaktplatten (18, 19) in ihrer Kontaktstellung von einem zwischen den inneren Kontaktplatten (18, 19) angebrachten, druckgasbetätigten, elastischen Mittel gegen ihre äusseren Kontaktplatten (17, 20) gepresst werden.

5. Kontakteinrichtung nach Patentanspruch 4, dadurch gekennzeichnet, dass als elastisches Mittel ein aufblasbarer Schlauch dient, der an die Druckgasquelle (47) mittels einer Anschlussleitung (48) anschliessbar ist.

6. Kontakteinrichtung nach Patentanspruch 4, dadurch gekennzeichnet, dass zwischen den innren Kontaktplatten (18, 19) eine elastische Dichtung (30, 31) angebracht ist, die bestrebt ist, die inneren Kontaktplatten (19, 19) voneinander zu trennen, wobei diese Dichtung (30, 31) zusammen mit den inneren Kontaktplatten (18, 19) mittels Anschlussleitung (48) eine an die Druckgasquelle (47) anschliessbare, gasdichte, ausdehnbare Ringkammer (34) bildet.

7. Kontakteinrichtung nach Patentanspruch 5 oder 6, dadurch gekennzeichnet, dass die zu den Kontaktplatten führenden Druckgasleitungen (43) und die Anschlussleitung (48) mittels eines Umschaltventils (44) abwechselnd an die gemeinsame Druckgasquelle (47) anschliessbar sind (Fig. 3).

**Claims**

1. Contact device having at least one pair of parallel contact plates (3, 4; 17, 18; 19, 20) for connection into a high current circuit between a welding transformer (15; 26) and a resistance welding device (16; 27) which plates are displaceable towards and away from each other along and rotatable relative to each other about a shaft (1; 22) extending vertically to the plane of the plates between a contact position in which the contact plates are firmly pressed against each other with their oppositely facing contact surfaces by means of a pressure device (6; 34) and a contact breaking position in which the contact plates at their contact surfaces (7, 8; 38, 40; 39, 41) are separated by a gap and are rotatable relative to each other about the shaft (1; 22) and are displaceable towards and away from each other, characterized in that at least one contact plate (4; 18, 19) of the pair of contact plates is provided with a compressed gas channel (10; 35) which forms a part of a compressed gas pipe (11; 43) which extends from a compressed gas source (12; 47) to an opening (9; 37) of the compressed gas channel in the contact surface (8; 38, 39).

2. Contact device according to claim 1, characterized in that the contact plate (4; 18, 19) is provided with at least three compressed gas channels (10; 35) whose openings (9; 37) are distributed preferably symmetrically in the contact surface (8; 38, 39) with respect to the shaft (1; 22).

3. Contact device according to claim 1 or 2, characterized in that in each of the compressed gas pipes (11; 43) connected with the compressed gas channels (10; 35) there is provided a throttle device (14; 42) which limits the quantity of gas per unit time flowing through the compressed gas channel.

4. Contact device according to one of the claims 1 to 3 with two pairs of contact plates (17, 18, 19, 20) arranged in series on the shaft (22) of which the two outermost contact plates (17, 20) are securely connected with each other and insulated from each other and the two innermost contact plates (18, 19) are displaceable relative to their corresponding outermost contact plates (17, 20), characterized in that the inner contact plates (18, 19) in their contact position are pressed against their outer contact plates (17, 20) by means of a compressed gas operated elastic means arranged between the inner contact plates (18, 19).

5. Contact device according to claim 4, characterized in that the elastic means is an inflatable tube which can be connected to the compressed gas source (47) by means of a connecting pipe (48).

6. Contact device according to claim 4, characterized in that between the inner contact plates (18, 19) there is arranged an elastic seal (30, 31) which is designed to separate the inner contact plates (18, 19) from each other, whereby this seal (30, 31) together with the inner contact plates (18, 19) forms a gas-tight, expansible annular chamber (34) connectable to the compressed gas source (47) through the connecting pipe (48).

7. Contact device according to claim 5 or 6, characterized in that the compressed gas pipes (43) leading to the contact plates and the connecting pipe (48) through a change-over valve (44) can be alternately connected to the common compressed gas source (47) (Fig. 3).

## Revendications

1. Dispositif de contact comprenant au moins une paire de plaques de contact parallèles (3, 4; 17, 18; 19, 20) destinées à la commutation dans un circuit à courant de forte intensité entre un transformateur de soudage (15; 26) et un appareil à souder à résistance (16; 27), qui peuvent être rapprochées et éloignées relativement les unes des autres le long d'un axe (1; 22) perpendiculaire au plan des plaques entre une position de contact dans laquelle les plaques de contact sont pressées fermement les unes contre les autres par leurs surfaces de contact (7, 8; 38, 40, 39, 41) tournées les unes vers les autres au moyen d'un dispositif de pression (6; 34), et une position de coupure dans laquelle les plaques de contact sont séparées, par leurs surfaces de contact, par un interstice et peuvent être tournées les unes par rapport aux autres autour de l'axe (1; 22), caractérisé en ce qu'au moins une plaque de contact (4; 18, 19) de la paire de plaques de contact est pourvue d'une canalisation à gaz sous pression (10; 35) qui constitue une partie d'une conduite à gaz sous pression (11; 43) s'étendant entre une source de gaz sous pression (12; 47) et une ouverture (9; 37) de la canalisation à gaz sous pression pratiquée dans la surface de contact (8; 38, 39).

2. Dispositif de contact selon la revendication 1, caractérisé en ce que la plaque de contact (4; 18, 19) est pourvue d'au moins trois canalisations à gaz sous pression (10; 35) dont les ouvertures (9; 37) sont réparties sur la surface de contact (8; 38, 39), de préférence symetriquement par rapport à l'axe (1; 22).

3. Dispositif de contact selon les revendications 1 et 2, caractérisé en ce qu'un dispositif d'étranglement (14; 42) est prévu dans chacune des conduites à gaz sous pression (11; 43) qui est reliée aux canalisations à gaz sous pression (10; 35), lequel dispositif limite la quantité de gaz s'écoulant dans la canalisation à gaz sous pression par unité de temps.

4. Dispositif de contact selon l'une des revendications 1 à 3, comprenant deux paires de plaques de contact (17, 18, 19, 20) disposées en rangée sur l'axe (22), dont les deux plaques de contact externes (17, 20) sont fermement reliées l'une à l'autre de façon isolée et dont les deux plaques de contact internes (18, 19) peuvent être déplacées relativement à leurs plaques de contact externes (17, 20) correspondantes, caractérisé en ce que les plaques de contact internes (18, 19), dans leur position de contact, sont pressées contre leurs plaques de contact externes (17, 20) par un moyen élastique actionné par un gaz sous pression et monté entre les plaques de contact internes (18, 19).

5. Dispositif de contact selon la revendication 4, caractérisé en ce que le moyen élastique est constitué par un tuyau extensible que l'on peut raccorder à la source de gaz sous pression (47) au moyen d'une conduit de raccordement (48).

6. Dispositif de contact selon la revendication 4, caractérisé en ce qu'une garniture élastique (30, 31) est disposée entre les plaques de contact internes (18, 19), dont la sollicitation tend à séparer les plaques de contact internes (18, 19) l'une de l'autre, ladite garniture (30, 31) constituant, avec les plaques de contact internes (18, 19) et au moyen d'une conduite de raccordement (48), une chambre annulaire expansible (34), étanche aux gaz et pouvant être raccordée à la source de gaz sous pression (47).

7. Dispositif de contact selon l'une des revendications 5 et 6, caractérisé en ce que les conduites à gaz sous pression (43) conduisant aux plaques de contact et la conduite de raccordement (48) peuvent être raccordées alternativement à la source de gaz sous pression commune (47) au moyen d'une soupape d'inversion (44) (Fig. 3).

## Fig.1

## Fig.2

0 021 306

Fig.3

Fig.4

Fig.5

2

## Fig.6

## Fig.7